(19) Europäisches Patentamt
European Patent Office
Office européen des brevets

(11) EP 1 698 652 A1

(12) **EUROPEAN PATENT APPLICATION**
published in accordance with Art. 158(3) EPC

(43) Date of publication:
**06.09.2006 Bulletin 2006/36**

(21) Application number: **04808023.8**

(22) Date of filing: **21.12.2004**

(51) Int Cl.:
***C08G 75/23*** (2006.01) ***C08G 65/48*** (2006.01)
***C08J 5/22*** (2006.01) ***H01B 1/06*** (2006.01)
***H01M 8/02*** (2006.01) ***H01M 8/10*** (2006.01)
*C08L 71/10* (2006.01) *C08L 81/06* (2006.01)

(86) International application number:
**PCT/JP2004/019672**

(87) International publication number:
**WO 2005/063854 (14.07.2005 Gazette 2005/28)**

(84) Designated Contracting States:
**DE FR GB**

(30) Priority: **25.12.2003 JP 2003429394**

(71) Applicants:
- **Sumitomo Chemical Company, Limited
Tokyo 104-8260 (JP)**
- **Sasaki, Shigeru
Tsukuba-shi, Ibaraki 3003261 (JP)**

(72) Inventors:
- **SASAKI, Shigeru
Tsukuba-shi, Ibaraki 3003261 (JP)**
- **ONODERA, Toru
Tsukuba-shi, Ibaraki 3050821 (JP)**
- **YASHIRO, Arihiro
Tsukuba-shi, Ibaraki 3050046 (JP)**

(74) Representative: **Henkel, Feiler & Hänzel
Patentanwälte
Maximiliansplatz 21
80333 München (DE)**

# (54) POLYMER ELECTROLYTE AND USE THEREOF

(57) An aromatic polymer electrolyte that when directly used in a methanol fuel cell, excels in methanol shutoff, etc. There is provided a polymer electrolyte comprising polymer main chains containing oxygen elements and/or sulfur elements and aromatic carbon rings and, directly bonded to some or all of the aromatic carbon rings of the entirety of the polymer electrolyte including side chains, ion exchange groups, wherein the ratio (R) of the number of aromatic condensed polycyclic carbon rings to the total number of aromatic carbon rings of the entirety of the polymer electrolyte including side chains (sum of the number of aromatic monocyclic carbon rings and the number of aromatic condensed polycyclic carbon rings) satisfies the formula: $1>R\geq 0.15$.

EP 1 698 652 A1

## Description

Technical Field

This invention relates to a polymer electrolyte, more specifically a polymer electrolyte having an oxygen element and/or sulfur element and an aromatic carbon ring on a polymer chain, in which an ion exchange group is directly bonded with a part or all of the aromatic carbon ring of the polymer electrolyte.

Background Art

A polymer having the proton conductivity, that is, a polymer electrolyte has been used as a diaphragm in an electrochemical device such as a primary battery, secondary battery or solid polymer electrolyte fuel cell. For example, a polymer electrolyte comprising as an active material an aliphatic polymer having a perfluoroalkylsulfonic acid group of a superacid in a side chain and perfluoroalkane in a main chain has been used heretofore because of excellent properties as a fuel cell material. Several problems have, however, been indicated such that the material is very expensive, low in heat resistance, and so poor in membrane strength that some sort of reinforcement is required for practical use. When said polymer electrolyte is used as a proton conductivity membrane material of a liquid fuel cell such as a fuel cell, which directly uses methanol (direct methanol-type fuel cell), it is known that this material is poor methanol-resistance as a liquid fuel, that is, low as a barrier to methanol and high in an overvoltage at a cathode.

In this condition, an effort to develop an inexpensive polymer electrolyte to replace the polymer electrolyte mentioned above has become active in recent years. Among developed polymer electrolytes, a polymer in which the sulfonic acid group is introduced into an aromatic polyether possessing the high heat resistance and good film strength, that is, an aromatic polymer comprising oxygen element and/or sulfur element and the aromatic carbon ring in the polymer main chain, wherein a polymer electrolyte has an ion exchange group directly bonded to a part or all of the polymer main chain and an aromatic carbon ring is composed of only aromatic monocyclic carbon ring in said polymer electrolyte is known. For example, an aromatic polymer electrolyte such as the sulfonated polyetherketone type (Japan Patent H11-502249A), sulfonated polyetheretherketone type (Japan Patent 2002-524631A), sulfonated polyetherethersulfone type (Journal of Membrane Science 83, 211 (1993)) and sulfonated polyetherethersulfone type (Japan Patent 2003-323904A) has been proposed.

Among these polymer electrolytes, an aromatic polymer electrolyte of sulfonated polyethersulfone is known useful as the proton conductive polymer electrolyte for the direct methanol-type fuel cell (Japan Patent 2003-323904A).

It has been proposed that an aromatic polymer electrolyte of sulfonated polyetherethersulfone comprising a polymer electrolyte, in which the polymer main chain includes an oxygen element and/or sulfur element and an aromatic carbon ring, an ion exchange group is bonded via an alkylene group to a part or all of the main chain and said polymer electrolyte comprises both the aromatic monocyclic carbon ring and the aromatic condensed polycyclic carbon ring. (Japan Patent 2003-100317A). However, when the aromatic polymer electrolyte described above is used in a solid polymer fuel cell, its water resistance is not sufficient. Particularly, when used in a direct methanol-type fuel cell, there is a problem that methanol-resistance is not acceptable.

Disclosure of the Invention

The present inventors have earnestly investigated to find an aromatic polymer electrolyte exhibiting excellent performance as a polymer electrolyte for the solid polymer fuel cell, particularly as a polymer electrolyte for the liquid fuel cell such as the direct methanol-type fuel cell. It was thereby found that use of a specific aromatic polymer electrolyte shows not only excellent methanol-resistance but also good water

resistance, when this polymer electrolyte comprises not only an aromatic monocyclic carbon ring but also an aromatic condensed polycyclic carbon ring as the aromatic carbon ring and a ratio (R) of the number of the aromatic condensed polycyclic carbon ring to the number of all of the aromatic carbon ring (sum of the number of the aromatic monocyclic carbon ring and the number of aromatic condensed polycyclic carbon ring) is not lower than 0.15 and lower than 1. Further various consideration by the present inventors completed the present invention.

That is, the present invention provides

(1) a polymer electrolyte comprising a polymer main chain having an oxygen element and/or sulfur element and an aromatic carbon ring, and an ion exchange group directly bonded to a part or all of the aromatic carbon ring in the polymer electrolyte,
wherein a ratio (R) (number of the aromatic condensed polycyclic carbon ring/number of all of the aromatic carbon ring) of the number of aromatic condensed polycyclic carbon ring to the number of all of the aromatic carbon ring (sum of the number of aromatic monocyclic carbon ring and the number of aromatic condensed polycyclic carbon

ring) in the polymer electrolyte satisfies the equation represented below,

$$1 > R = 0.15$$

wherein ratio.

The present invention provides

(2) a polymer electrolyte in the above (1), in which the polymer electrolyte comprises one or more kind of the repeating units having the ion exchange group selected from a general formula below,

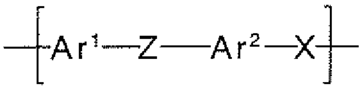

(1a)

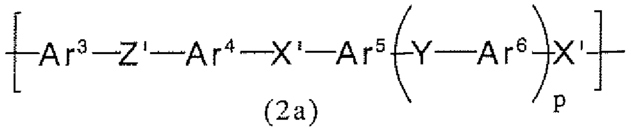

(2a)

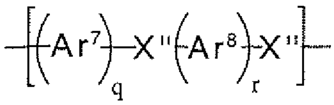

(3a)

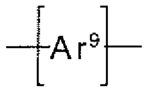

(4a)

(wherein $Ar^1$-$Ar^9$ represents a divalent aromatic carbon ring, which may have a substituent independent of each other and have an ion exchange group on the aromatic carbon ring. When the substituent on $Ar^1$-$Ar^9$ has an aromatic carbon ring, said aromatic carbon ring may have the ion exchange group. Z and Z' represent either CO or $SO_2$ independent of each other, whereas X, X' and X" represent either O or S independent of each other. Y represents a direct bond or a methylene group, which may have a substituent. p represents 0, 1 or 2, whereas q and r represent 1, 2 or 3 independent of each other.)

and one or more kind of the repeating units substantially not having the ion exchange group selected from a general formula (1b)-(4b) below,

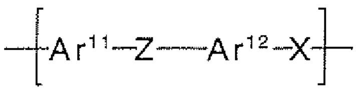

(1b)

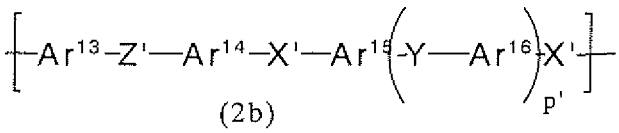

(2b)

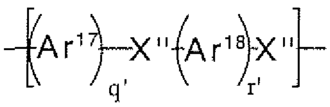

(3b)

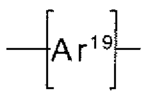

(4b)

(wherein $Ar^{11}$-$Ar^{19}$ represent a divalent aromatic carbon ring, which may have a substituent independent of each other. Z and Z' represent CO or $SO_2$ independent of each other, whereas X, X' and X"' represent either O or S independent of each other. Y represents a direct bond or a methylene group, which may have a substituent. p' represents 0, 1 or 2, whereas q' and r' represent 1, 2 or 3 independent of each other.) The present invention also provides

(3) a polymer electrolyte in the above (1), wherein the polymer electrolyte comprises a general formula (5) below,

$$-\left(Ar^1-Z-Ar^2-X\right)_a\left(Ar^3-Z'-Ar^4-X'-Ar^5-X'\right)_b- \quad (5)$$

(wherein $Ar^1$-$Ar^5$ represent a divalent aromatic carbon ring which may have a substituent independent of each other. and Z and Z' represent either CO or $SO_2$ independent of each other, whereas X and X' represent either O or S independent of each other. When any of $Ar^1$-$Ar^5$ does not contain an aromatic carbon ring as a substituent, at least any one of $Ar^1$-$Ar^5$ contains the ion exchange group. When any substituent in $Ar^1$-$Ar^5$ contains the aromatic carbon ring, at least any one in $Ar^1$-$Ar^5$ or the aromatic carbon ring contained has the ion exchange group in the aromatic carbon ring. The number of the repeating unit a and b represents an integer larger than 0, respectively and a + b is larger than 20.) Furthermore, the present invention provides

(4) any polymer electrolyte in the above (1) to (3), wherein the aromatic condensed polycylclic carbon ring is selected from a two-ring to four-ring aromatic condensed polycyclic carbon ring,

(5) any polymer electrolyte in the above (1) to (4), wherein the ion exchange group is an acid group,

(6) any polymer electrolyte in the above (5), wherein any acid group is selected from the sulfonic acid group, phosphonic acid group or carboxylic acid group,

(7) any polymer electrolyte in the above (1) to (6), wherein an ion exchange capacity is 0.1-4 meq/g,

(8) any polymer electrolyte in the above (1) to (4), wherein the polymer electrolyte comprises one or more of both a block having the acid group and a block substantially not having the acid group, respectively,

(9) a polymer electrolyte in the above (8), wherein the block substantially having no acid group contains the aromatic condensed polycyclic carbon ring,

(10) a polymer electrolyte composition comprising the polymer electrolyte described in any one of the above (1) to (9) as an active ingredient,

(11) a polymer electrolyte membrane comprising the polymer electrolyte described in any one of the above (1) to (9) or the polymer electrolyte composition described in the above (10),

(12) a polymer electrolyte membrane for a direct methanol-based fuel cell formed by using the polymer electrolyte described in any one of the above (1) to (9) or the polymer electrolyte composition described in the above (10),

(13) a solid polymer fuel cell comprising the polymer electrolyte described in any one of the above (1) to (9), the polymer electrolyte composition described in the above (10), or the polymer electrolyte membrane described in the above (11) and

(14) a direct methanol-type fuel cell comprising the polymer electrolyte described in any one of the above (1) to (9), the polymer electrolyte composition described in the above (10), or the polymer electrolyte membrane described in the above (12).

Best Mode for Carrying out the Invention

The present invention is described in detail below.

The polymer electrolyte in the present invention comprises a polymer main chain having both the oxygen element and/or sulfur element and the aromatic carbon ring, wherein the ion exchange group is directly bonded to a part or all of the aromatic carbon ring in the polymer electrolyte, wherein the ratio (R) of the number of the aromatic condensed polycyclic carbon ring to the number of all of the aromatic monocyclic carbon ring (sum of the number of the aromatic monocyclic carbon ring and that of the aromatic condensed polycyclic carbon ring) satisfies the aforementioned equation. R is preferably not less than 0.2.

It is herein essential for the polymer main chain to have the aromatic carbon ring as a hydrocarbon group in addition to the oxygen or sulfur element as mentioned above. The main chain may further contain an aliphatic group, but preferably comprises substantially both the aromatic carbon ring and the oxygen atom and/or sulfur atom.

A example having such main chain includes, for example, poly(oxyarylene), poly(thioarylene), poly(sulfinylarylene), poly(sulfonylarylene), poly(oxyarylenesulfonylarylene), poly(oxyaryleneoxyarylenesulfonylarylene), poly (oxyarylenecarbonylarylene), poly(oxyaryleneoxyarylenecarbonylarylene), a copolymer of two or more of these groups chosen thereof and a copolymer of these polymer with one selected from a group of polyarylene, poly(alkylenearylene) or poly(carbonylarylene).

When the main chain is a copolymer, a bonding form can be any of an alternate copolymer, random copolymer or block copolymer. Furthermore, a plurality of the arylene group can be either same or different. When the alkylene group is present, it can be either same or different.

Furthermore, the polymer electrolyte in the present invention can be a graft copolymer, in which the above polymer is grafted to the main chain.

An acid group is generally used as the ion exchange group. Such acid group can be any one of a weak or strong acid or superacid and for example, the sulfonic acid, sulfoneimide, phosphonic acid or carboxylic acid group is preferably used. Among them, the sulfonic acid and sulfoneimide groups are more preferable.

A part or all of these ion exchange groups may form an salt with a metal ion, but preferably all of them are in a state of the substantially free acid when used as the polymer electrolyte membrane for the fuel cell.

The polymer electrolyte in the present invention comprises both the polymer main chain and the ion exchange group as mentioned above, wherein the ion exchange group is directly bonded to a part or all of the aromatic carbon rings in the polymer electrolyte. The ratio (R) of the number of aromatic condensed polycyclic carbon ring to that of all aromatic carbon ring in the polymer electrolyte satisfies the equation described above. When the main chain of the polymer electrolyte in the present invention contains a substituent, said substituent may contain the aromatic carbon ring and the aromatic carbon ring in the substituent may contain the ion exchange group.

A preferred polymer electrolyte preferably comprises one or more kind of the repeating unit having an ion exchange group chosen from a general formula of (1a) to (4a) below,

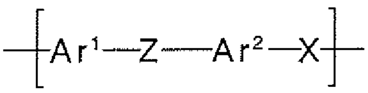

(1a)

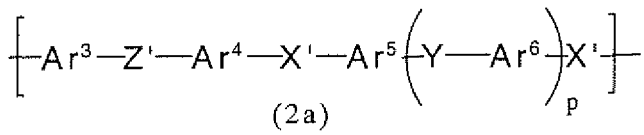

(2a)

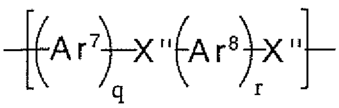

(3a)

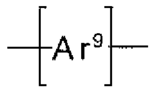

(4a)

(wherein $Ar^1$-$Ar^9$ represent a divalent aromatic carbon ring, which may have a substituent independent of each other and an ion exchange group in the aromatic carbon ring. When the substituent in $Ar^1$-$Ar^9$ has an aromatic carbon ring, said aromatic carbon ring may have the ion exchange group. Z and Z' represent either CO or $SO_2$ independent of each other, whereas X, X' and X" represent either O or S independent of each other. Y represents a methylene group, which may have a direct bond or a substituent. p represents 0, 1 or 2, whereas q and r represent 1, 2 or 3 independent of each other.) and one or more repeating units substantially not having the ion exchange group selected from a general formula (1b)-(4b) below,

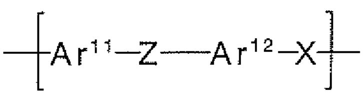

(1b)

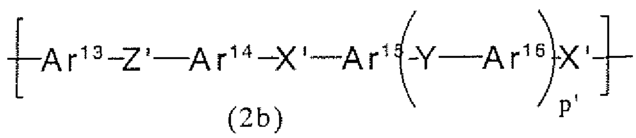

(2b)

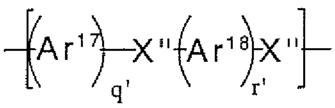

(3b)

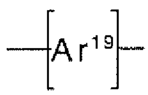

(4b)

(wherein $Ar^{11}$-$Ar^{19}$ represent a divalent aromatic carbon ring, which may have a substituent independent of each other. Z and Z' represent either CO or $SO_2$ independent of each other, whereas X, X' and X"' represent either O or S independent of each other. Y represents a methylene group, which may have a direct bond or substituent. p' represents 0, 1 or 2, whereas q' and r' represent 1, 2 or 3 independent of each other.) At least one of the repeating unit chosen herein contains the aromatic condensed polycyclic hydrocarbon ring.

These repeating units are more preferably a block in the polymer electrolyte.

The polymer electrolyte in the present invention preferably contains the repeating units as mentioned above

and its total amount in the polymer electrolyte molecule is generally greater than 50% by weight.

The aromatic carbon ring in each of the above formula herein includes an aromatic monocyclic carbon ring represented by the benzene ring and an aromatic condensed polycyclic carbon ring including two-ring the naphthalene and azulene, three-ring anthracene and phenanthrene and four-ring pyrene. The naphthalene ring is preferred among the aromatic condensed polycyclic carbon ring.

Furthermore the divalent aromatic carbon ring includes, for example, 1,4-phenylene, 1,3-phenylene and 1,2-phenylene containing the benzene ring, 1,4-napththylene, 1,5-naphthylene, 2,6-naphthylene and 2,7-naphthylene containing the naphthalene ring, azulene-1,5-diyl containing the azulene ring, anthracene-9,10-diyl, anthracene-2,6-diyl and anthracene-2,7-diyl containing the anthracene ring, phenanthrene-9,10-diyl containing the phenanthrene ring and pyrene-1,6-diyl and pyrene-4.9-diyl containing the pyrene ring.

A divalent aromatic carbon ring containing a substituent includes the divalent aromatic carbon ring previously mentioned having at least one substituent, for example, a C1-C10 alkyl group possibly substituted with a halogen atom such as fluoro or chloro, a C1-C10 alkoxy group possibly substituted with a halogen atom such as fluoro or chloro, a phenyl group, a phenoxy group, a benzoyl group, a naphthyl group, a naphthoxy group, a naphthoyl group, a halogen group such as fluoro or chloro, a hydroxyl group, a cyano group or an amino group.

An acid group is preferred as the ion exchange group and above all, any acid group chosen from a group of the sulfonic acid, sulfoneimide, phosphonic acid or carboxylic acid group is preferred. Among them, the sulfonic acid and sulfoneimide group are preferred.

Z and Z' represent either CO or SO2 independent of each other, but $SO_2$ is preferred, whereas X, X' and X" represent either O or S independent of each other, but O is preferred. Y represents a methylene group directly bonded or having a substituent, but a direct bond is preferred. p and p' represent 0, 1 or 2 independent of each other, but preferably either 0 or 1. q, r, q' and r' represent 1, 2 or 3 independent to each other and preferably 1 or 2.

A polymer structure of the polymer electrolyte comprising any one or more of the above general formula (1a), (2a), (3a) and (4a) and any one or more of the above general formula (1b), (2b), (3b) and (4b) as the repeating units may include any one of the block r, alternate or random copolymers.

Herein the block copolymer is preferably a polymer comprising one or more blocks substantially not containing the ion exchange group and one or more blocks containing the ion exchange group, respectively. In this case, these blocks may be coupled directly each other or via a connecting group. The block not substantially having the ion exchange group and the block having the ion exchange group preferably have a number average molecular weight greater than 2000, respectively or generally more than five repeating units. More preferably each block has a number average molecular weight greater than 3000 or generally more than eight repeating units.

The alternate copolymer is preferably a polymer formed by the repeating unit, where the monomer unit substantially not having the ion exchange group and the one having the ion exchange group are alternately place.

The term "substantially not having the ion exchange group" means the number of the ion exchange group per the repeating unit is less than 0.1 in average, whereas the term "having the ion exchange group" means the number of the ion exchange group per the repeating unit is greater than one in average.

In the present invention, a preferable block copolymer includes one or more kind of the block comprising the repeating unit having the ion exchange group chosen from the general formula (1a), (2a), (3a) and (4a) and one or more kind of the block comprising the repeating unit substantially not having the ion exchange group chosen from the general formula (1b), (2b), (3b) and (4b), but more preferably includes the copolymer having the block listed below.

(i) The block comprising the repeating unit (1a) and the block comprising the one (1b).
(ii) The block comprising the repeating unit (1a) and the block comprising the repeating unit (2b).
(iii) The block comprising the repeating unit (2a) and the block comprising the repeating unit (1b).
(iv) The block comprising the repeating unit (2a) and the block comprising the repeating unit (2b).
(v) The block comprising the repeating unit (3a) and the block comprising the repeating unit (1b).
(vi) The block comprising the repeating unit (3a) and the block comprising the repeating unit (2b).
(vii) The block comprising the repeating unit (4a) and the block comprising the repeating unit (1b).
(viii) The block comprising the repeating unit (4a) and the block comprising the repeating unit (2b).
The most preferable copolymer comprises the block of (ii).
(iii) and (iv) listed above.

In the block copolymer, the aforementioned aromatic condensed polycyclic carbon ring may be included only in either the block substantially not having the ion exchange group or the one having the ion exchange group or in both blocks.

The aromatic condensed polycyclic carbon ring is preferably included in the block substantially not having the ion exchange group in order to control the methanol permeability and improve the water resistance. For instance, it is preferable that the block comprises at least one kind of the repeating unit (1b) or (2b) substantially not having the ion

exchange group and at least said (1b) or (2b) contains the aromatic condensed polycyclic carbon ring. Above all, the case is preferred, in which the block substantially not having the ion exchange group comprises the repeating unit (2b), wherein said (2b) contains the aromatic condensed polycyclic carbon ring.

In the present invention, a preferable random copolymer may be a copolymer which comprises the repeating unit having one or more kind of the ion exchange group chosen from the general formula (1a), (2a), (3a) and (4a) and the one substantially not having one or more kind of the ion exchange group selected from the general formula (1b), (2b), (3b) and (4b), but more preferable random copolymer may include the copolymer having the repeating unit listed below.

(a) The repeating unit (1a) and the repeating unit (1b).
(b) The repeating unit (1a) and the repeating unit (2b).
(c) The repeating unit (1a) and the repeating unit (3b).
(d) The repeating unit (2a) and the repeating unit (1b).
(e) The repeating unit (2a) and the repeating unit (2b).
(f) The repeating unit (2a) and the repeating unit (3b).
(g) The repeating unit (3a) and the repeating unit (1b).
(h) The repeating unit (3a) and the repeating unit (2b).
(i) The repeating unit (4a) and the repeating unit (1b).
(k) The repeating unit (4a) and the repeating unit (2b).

The most preferable random copolymer can include (a), (b), (d) and (e) mentioned above.

The polymer electrolyte in the present invention preferably comprises both the repeating unit having the above ion exchange group and the one substantially not having the ion exchange group, but is more preferably given by the general formula (5) below,

$$-\left(Ar^1-Z-Ar^2-X\right)_a\left(Ar^3-Z'-Ar^4-X'-Ar^5-X'\right)_b- \quad (5)$$

(wherein $Ar^1$-$Ar^5$ represent a divalent aromatic carbon ring, which may have a substituent independent of each other, and Z and Z' represent either CO or $SO_2$ independent of each other, whereas X and X' represent either O or S independent of each other. When any of $Ar^1$-$Ar^5$ does not contain an aromatic carbon ring as a substituent, at least any one of $Ar^1$-$Ar^5$ contains the ion exchange group, whereas when any substituent in $Ar^1$-$Ar^5$ contains the aromatic carbon ring, at least any one of $Ar^1$-$Ar^5$ or the aromatic carbon ring contained has the ion exchange group in the aromatic carbon ring. The number of the repeating unit a and b represents an integer larger than 0, respectively and a + b is larger than 20.)

and the ratio (R) of the number of the aromatic condensed polycyclic carbon ring to the number of all of the aromatic carbon ring in the whole electrolyte polymer including the side chain satisfies the aforementioned equation.

The aromatic carbon ring, divalent aromatic carbon ring and divalent aromatic carbon ring having the substituent herein includes the one as described previously. Z, Z', X and X' are similar to the one mentioned previously. a and b represents an integer greater than 0 and a+b is greater than 20. Preferably Z is $SO_2$, X is O and b is 0. Or preferably Z' is $SO_2$, X' is O and a is 0. Or preferably Z is $SO_2$, X is O, Z' is $SO_2$ and X' is O. Or preferably Z is CO, X is O, Z' is $SO_2$ and X' is O. Or Z is $SO_2$, X is O, Z' is CO and X' is O.

A form of the polymer in the polymer electrolyte represented by the general formula (5) may be any one of the block, alternate or random copolymers.

The block copolymer preferably comprises the block having at least one kind of the ion exchange group chosen from the repeating unit -$Ar^1$-Z-$Ar^2$-X- and -$Ar^3$-Z'-$Ar^4$-X'-$Ar^5$-X'- and the block substantially not having at least one kind of the ion change group chosen from the repeating unit -$Ar^1$-Z-$Ar^2$-X- and -$Ar^3$-Z'-$Ar^4$-X'-$Ar^5$-X'-. The number of the repeating unit a and b is the sum of the repeating number of the block comprising said repeating unit and each of them is preferably greater than 5, more preferably greater than 8.

The alternate copolymer is preferably a polymer electrolyte, which comprises at least one kind of the repeating unit chosen from -$Ar^1$-Z-$Ar^2$-X- and -$Ar^3$-X'-$Ar^4$-X'-$Ar^5$-X'-, wherein the ion exchange group is positioned in any one of $Ar^1$-$Ar^5$ or its substituent. For example, an polymer electrolyte can be exemplified, in which a is equal to 0 and the ion exchange group is directly introduced into $Ar^5$.

The random copolymer is preferably the one, which comprises the repeating unit having at least one kind of the ion exchange group chosen from -$Ar^1$-Z-$Ar^2$-X- and -$Ar^3$-X'-$Ar^4$-X'-$Ar^5$-X'- and the repeating unit substantially not

having at least one kind of the ion change group chosen from -$Ar^1$-Z-$Ar^2$-X- and -$Ar^3$-Z'-$Ar^4$-X'-$Ar^5$-X'-.

A specific exemplary example of the polymer electrolyte in the present invention includes, for example, the polymer electrolyte below.

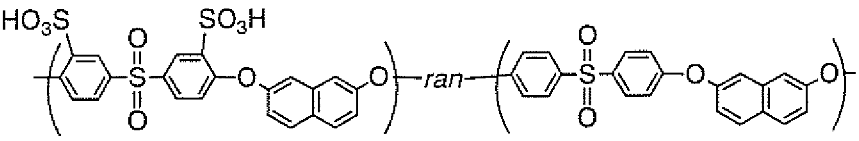
(11)

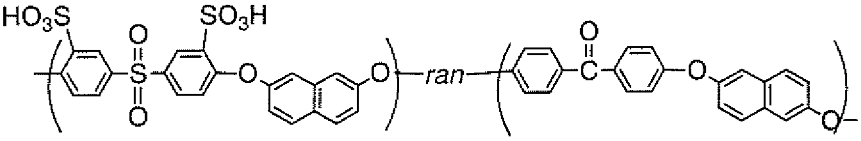
(12)

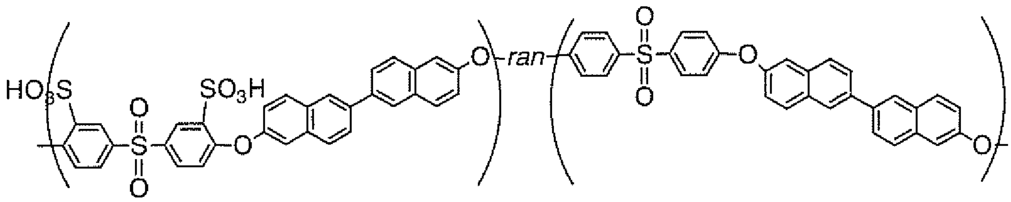
(13)

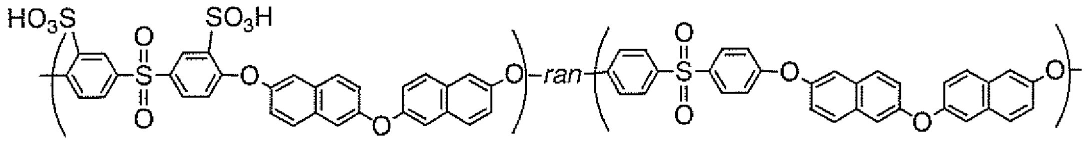
(14)

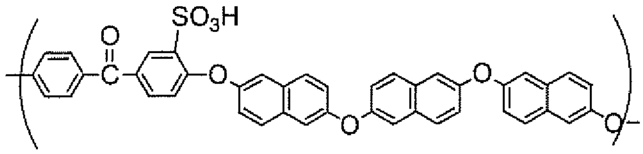
(15)

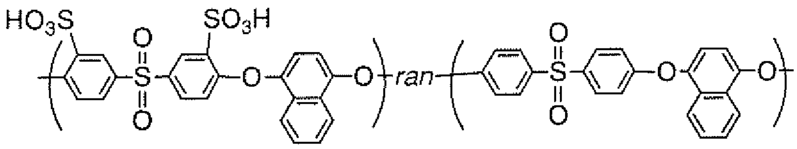
(16)

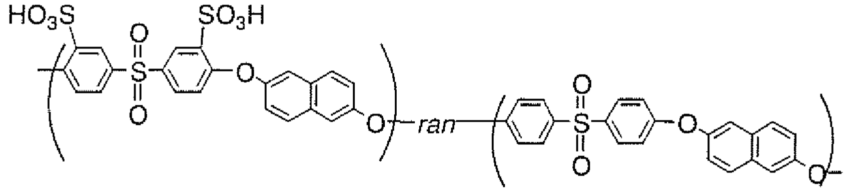
(17)

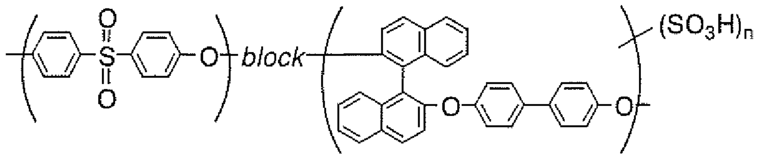

(18)

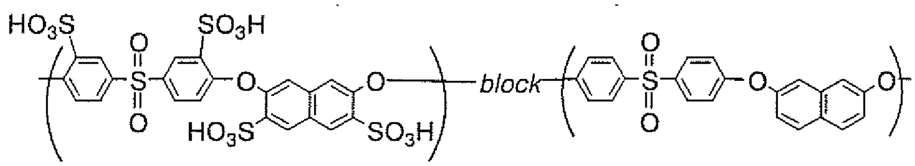

(19)

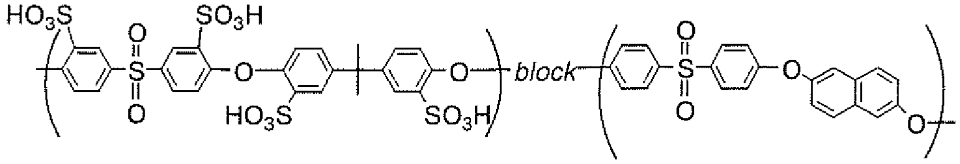

(20)

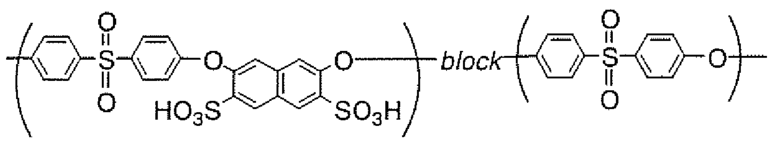

(21)

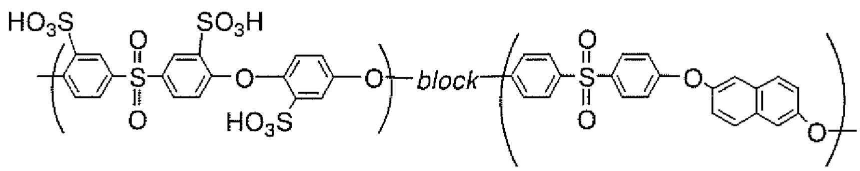

(22)

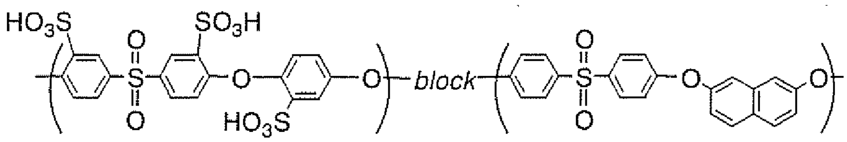

(23)

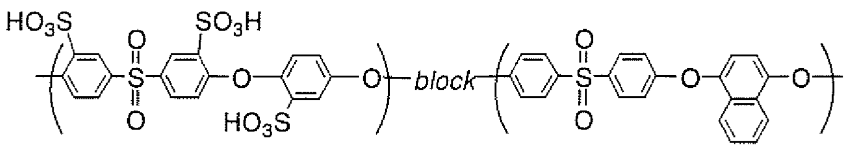

(24)

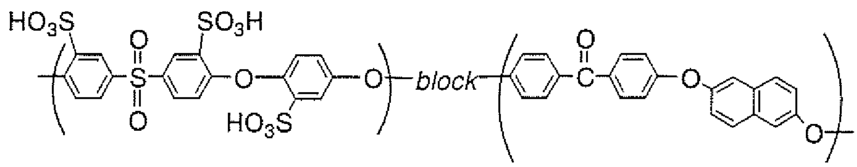

(25)

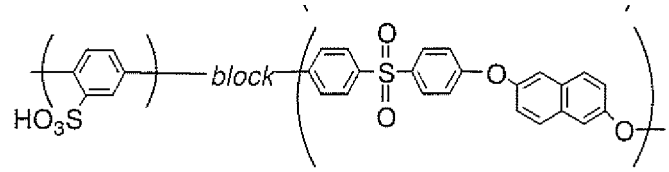

(26)

The preferred polymer electrolyte includes, for example, the above (11), (12), (16), (17), (19) and (21) to (25) and more preferred polymer electrolyte includes, for example, the above (11) (17), (22) and (23).
In the present invention, the polymer electrolyte satisfies the following equation of (R) of the ratio of the number of the aromatic condensed polycyclic carbon ring to the number of all of aromatic carbon ring (sum of the number of the aromatic monocyclic carbon ring and the number of the aromatic condensed polycyclic carbon ring) in the whole polymer electrolyte including the side chain,

$$1 > R = 0.15$$

A lower limit of R is preferably not less than 0.2, more preferably not less than 0.25 and further more preferably not less than 0.33, whereas an upper limit is preferably not higher than 0.9 and more preferably not higher than 0.8. When R is too small, the methanol permeability might not be controlled fully and the water resistance would not be sufficient, whereas when R is too large, the solubility of the polymer electrolyte might decrease so low to make processing more difficult. Both cases are not desirable.

In determining the value of R, the NMR peaks corresponding to the proton in the monocyclic carbon ring and the proton in the condensed polycyclic carbon ring is identified by the high resolution NMR and then the area ratio of these protons are compared to evaluate the relative value of the number of the aromatic monocyclic carbon ring to the number of the aromatic condensed polycyclic carbon ring and then calculate the value of R according to the aforementioned equation for a general use.

The ion exchange capacity in the polymer electrolyte in the present invention is generally 0.1-4 meq/g, while its lower limit is preferably not less than 0.5 meq/g, more preferably not less than 0.8 meq/g and its upper limit is preferably not higher than 3.0 meq/g, more preferably not higher than 2.5 meq/g.

When the ion exchange capacity is too low, the proton conductivity might be decreased to cause insufficient performance as the polymer electrolyte for the fuel cell, whereas when too high, the water resistance becomes poor. Both cases are not desirable.

The ion exchange capacity can optionally be optionally regulated by controlling the number of the acid group in the polymer electrolyte, that is, adjusting the aromatic ring composition (kind and component ratio) in the polymer electrolyte, selecting the sulfonation reagent and adjusting the sulfonation condition such as temperature, time and concentration.

The molecular weight of the polymer electrolyte in the present invention preferably ranges from 5,000 to 1,000,000 as given in the number average molecular weight based on a polystyrene calibration by the GPC method. More preferably it is not lower than 15,000 but not higher than 300,000.

When the molecular weight is too low, the film forming property and membrane strength tend to be insufficient or the water resistance incline to be insufficient, whereas when too high, the solubility of the polymer electrolyte becomes low to possibly cause poor processability. Both cases are not desirable.

A manufacture method of the polymer electrolyte in the present invention is then described.

The polymer electrolyte in the present invention can be manufactured according to the method known in the art. That is, this polymer can be manufactured by polymerizing an aromatic compound having a reactive susbstituent such as the halogen, nitro, mercaptan, hydroxyl and alkylsulfonyloxy group via a polymerization method such as the condensation or oxidative polymerization and then introducing the ion exchange group such as the sulfonic acid group by reacting with the sulfonation reagent before or after polymerization or both before and after polymerization.

A method to introduce the acid group, for example, the sulfonic acid group in order to manufacture of the polymer electrolyte in the present invention includes, in the case of its introduction after polymerization, the one, where the polymer not introduced or partly introduced with the acid group is dissolved or suspended in concentrated sulfuric acid or at least partly dissolved in an organic solvent and then reacted with concentrated sulfuric acid, chlorosulfonic acid, fumed sulfuric acid or sulfur trioxide to introduce the sulfuric acid or the pre-introduced mercapto, methyl, hydroxyl or bromo group is converted to the sulonic acid, sulfonylimide, carboxylic acid or phosphonic acid group via the oxidation, substitution or condensation reaction. More specifically, a mixture solution of dihydroxynaphthalene and difluorodiphenylsulfone is heated in the presence of a base to polymerize by condensation to manufacture poly(oxynaphthyleneoxyphenylenesulfonylphenylene), which then sulfonated by the action of sulfuric acid according to the method known in the prior art to yield the polymer electrolyte in the present invention.

A manufacture method for the random copolymer herein includes, for instance, a method below.

I. Method to react a dihyroxy or dihalogeno aromatic compound having the acid group or a monohydroxy monohalogeno aromatic compound having the acid group in combination with a dihydoxy or dihalogeno aromatic compound not having the acid group or a monohydroxy monohalgeno aromatic compound not having the acid group.
II. Method to sulfonate according to the method known in the prior art the polymer, which is obtained by reacting a dihydroxy or dihalogeno aromatic compound not having the acid group or a monohydroxy monohalogeno aromatic compound not having the acid group in combination with a dihyroxy or dihalgeno aromatic compound not having the acid group or a monohydroxy monohalogeno aromatic compound not having the acid group.

A manufacture method for the alternate copolymer herein includes, for example, a method below.

I. Method to react a dihydroxy or dihalogeno aromatic compound having the acid group with a dihyroxy or dihalogeno aromatic compound not having the acid group in the equivalent mole for each.
II. Method to sulfonate according to the method known in the prior art the polymer, which is obtained by reacting a dihydroxy or dihalogeno aromatic compound not having the acid group with a dihyroxy or dihalgeno aromatic compound not having the acid group in the equivalent mole for each.

A manufacture method for the block copolymer includes, for example, a method below.

I. Method to selectively introduce the acid group into only one kind of the block after manufacturing the block copolymer comprising two kinds of blocks with a different repeating unit.
II. Method to obtain the block copolymer by manufacturing a polymer or oligomer of the precursor for the block introduced by the acid group, followed by coupling to a polymer or oligomer for the precursor of the block substantially not having the acid group.
III. Method by a combination of I with II aforementioned.

The block copolymer manufactured by the manufacture method I can be manufactured by reacting a precursor polymer or oligomer having the hydroxy or halogeno group at both ends or the hydroxy group at one end and the halogen group at the other in combination with the polymer or oligomer having the hydroxy or halogeno group at both ends or the hydroxy group at one end and the halogen group at the other.

For example, the method includes (a) nucleophilic substitution condensation of a polymer having the hydroxy group at both ends with a polymer having the halogeno group at both ends in the presence of a base, (b) nucleophilic substitution condensation of the polymer having the hydroxyl group and the halogeno group at each end with a different polymer having the hydroxyl group and the halogeno group at each end in the presence of the base, (c) coupling of the polymer having the dihyroxy group at both ends with a different polymer having the dihyroxy group at both ends serving as a coupling compound such as 4,4'-difluorobenzophenone, decafluorobiphenyl, hexaflurobenzene or 4,4'-difluorodiphenylsulfone, and (d) coupling of the polymer having the dihalogeno group at both ends to a different polymer having the dihalogeno group at both ends using a compound with a coupling function such as 4,4'-dihydroxybiphenyl, bisphenol A, 4,4'-dihydroxybenzophenone or 4,4'-dihydroxydiphenylsulfone or condensing them via dehalogenation. The block copolymer can be manufactured by polymerizing a polymer and a monomer having a reactive group, which enables the elementary reaction similar to the reaction aforementioned.

Furthermore, when a multifunctional coupling group in the compound such as decafluorobiphenyl or hexafluorobenzene in manufacture of the block copolymer using the coupling group as described in (c), a block copolymer having a branch structure can be manufactured by controlling the reaction condition. In this case, the charged composition and reaction of the polymer or oligomer for the block precursor having the acid group to polymer or oligomer for the block precursor substantially not having the acid group can be varied so as to selectively manufacture the block copolymer with a linear chain structure from the block copolymer with the branch structure.

A method to introduce the acid group into only one block of the block copolymer comprising two kinds of the block substantially not having the acid group includes, for example, a method (I-1) to dissolve or suspend the block copolymer in concentrated sulfuric acid or fuming sulfuric acid or at least partly dissolve in an organic solvent and then react with concentrated sulfuric acid, chlorosulfonic acid, fuming sulfuric acid or sulfur trioxide to introduce the sulfonic acid group. This method allows manufacture of the polymer electrolyte shown in the equation (18) and (21).

In the method (II) aforementioned for the manufacture of the block copolymer, for example, the polymer or oligomer for the precursor of the block having the acid group can be manufactured according to the method for introduction

of the acid group in (I-1) aforementioned (II-1) as well as by polymerization of the monomer having the pre-introduced acid group (II-2). The block copolymer can also be manufactured according the method similar to the one in I. The acid group can be introduced to the block copolymer manufactured by the method in II using the method in I.

The method in II gives a better result than the method in I in order to obtain the block copolymer, in which a given number of the sulfonic acid group is introduced in strictly controlled manner into the block having the acid group and the aromatic carbon ring in the block substantially not having the acid group is little sulfonated. An acceptable gross number of the block substantially not having the acid group and the block having the acid group in these block copolymers is greater than 2 and the larger is the gross number, smaller is the distribution of the ion exchange capacity.

Use of the polymer electrolyte in the present invention as a membrane of the electrochemical device such as a fuel cell is then described.

In this case, the polymer electrolyte in the present invention is generally used in a form of the film. A conversion method to the film is not particularly limited, for example, a film forming method from a solution (solution cast method) can be preferably used.

Specifically the polymer electrolyte in the present invention is dissolved in a suitable solvent to yield a solution, which is flow-casted on a glass plate to evaporate the solvent yielding the film. A solvent for the film forming includes, but is not limited to, a solvent enabling dissolution of the polymer electrolyte in the present invention and then removal, including an aprotic polar solvent such as N,N-dimethylformamide, N,N-dimethylacetamide (DMAc), N-methyl-2-pyrrolidone and dimethylsulfoxide (DMSO), a chlorinated solvent such as dichloromethane, chloroform, 1,2-dichloroethane, chlorobenzene and dichlorobenzene, an alcohol such as methanol, ethanol and propanol and an alkylene glycol monoalkyl ether such as ethylene glycol monomethyl ether, ethylene glycol monoethyl ether, propylene glycol monomethyl ether and propylene glycol monoethyl ether for a preferred use. This solvent can be used singly, but more than two kinds of the solvent can be mixed if necessary. Among them, dimethylsulfoxide, N,N-dimethylformamide, N, N-dimethylacetamide and N-methylpyrrolidone are preferred because of higher solubility for the polymer electrolyte.

A film thickness is not particularly limited, but preferably from 10 to 300μm. A film thinner than 10μm is insufficient in strength for a practical use, whereas a film thicker than 300 μm tends to increase the film resistivity to reduce the performance of the electrochemical device. The membrane thickness can be controlled by adjusting the solution concentration and coated thickness on the base plate.

A plasticizer, a stabilizer and a mold release agent used in a general polymer can be added to the polymer electrolyte in the present invention to formulate the polymer electrolyte composition. Other polymer can form a composite alloy with the polymer electrolyte in the present invention by using a mixed co-casted method, in which two solutions in the same solvent are used.

It is also known to add an inorganic or organic filler as a water retention agent to the polymer electrolyte to formulate the polymer electrolyte composition in order to make water management easier in an application to the fuel cell. These methods known in the prior art can be used as far as any of them is not adverse to the purpose of the present invention.

The film can be irradiated with an electron beam or radioactive radiation to crosslink in order to improve the mechanical strength of the film. Furthermore, impregnation a porous film or sheet for a composite or mixing the film with fibers or a pulp to reinforce is also known and can be used as far as these methods known in the prior art are not adverse to the purpose of the present invention. The polymer electrolyte in the present invention can also be used as a polymer ion exchange component, which is one of the elements in the catalyst layer of the fuel cell.

The fuel cell in the present invention is then described.

The fuel cells in the present invention can be manufactured by attaching a catalyst and an electroconductive substance as the catalyst and current collector to both sides of the polymer electrolyte film.

The catalyst herein is not particularly limited so far as it can activate the oxidation-reduction reaction with hydrogen or oxygen, and the one known in the prior art can be used, but a microparticle of platinum or a platinum alloy is preferably used. The platinum or platinum alloy microparticle is often supported on the particulate or fibrous carbon such as activated charcoal or graphite and preferably used in this form. The platinum supported on carbon is mixed with an alcohol solution of the a perfuloroalkylsulfonic acid resin as the polymer electrolyte to form a paste, which is applied to a gas diffusion layer and/or polymer electrolyte membrane and/or polymer electrolyte composite membrane to dry and then forming the catalyst layer. A method known in the prior art can be used, while a specific method described, for example, in J. Electrochem. Soc., Electrochemical Science and Technology, 1988, 135 (9), 2209, can be used.

The polymer electrolyte in the present invention instead of the perfluoroalkylsulfonic acid resin as the polymer electrolyte can be herein formulated to use as the catalyst composition.

A material known in the prior art for an electroconductive substance as the current collector can be used, but a porous carbon fabric, carbon non-woven fabric or carbon paper is preferred in order to efficiently mass-transport the raw material gas to the catalyst.

The fuel cell thus manufactured in the present invention can be used in various forms using the hydrogen gas, modified hydrogen gas and methanol as a fuel.

Example

The present invention is described using examples below, but not limited to these examples in any way.

Molecular Weight Determination:

Gel permeation chromatography (GPC) was used to determine the number average molecular weight (Mn) calibrated by polystyrene under the condition below.

| | |
|---|---|
| Instrument for GPC measurement: | HLC-8220 by TOSOH Corporation |
| Column: | both KD-80 and KD-803 by Shodex Corporation were connected in series or two AT-80M columns by Shodex Corporation were connected in series. |
| Column temperature: | 40°C |
| Mobile phase solvent: | DMAc (LiBr was added to adjust the concentration to 10 mmol/dm$^3$.) |
| Solvent flow rate: | 0.5 mL/min |

Determination of Proton Conductivity:

An alternating current technique was used at a temperature of 80°C and a relative humidity of 90% to determine the proton conductivity.

Determination of Ion Exchange Capacity:

A titration method was used to determine the ion exchange capacity.

Determination of Water Absorptivity:

A dry film was weighed and immersed in deionized water at 100 °C for two hours and weighed to determine the weight increase of the film to calculate the amount of absorbed water and then determine the ratio against the dry film.

Determination of Methanol Permeation Coefficient:

A polymer electrolyte membrane for measurement was supported at the center of a H-letter shaped membrane cell composed of cell A and cell B. A 10% by weight aqueous methanol and pure water were added to cell A and cell B, respectively. After a given time at 23°C, the methanol concentration in both cells A and B were quantified to calculate the methanol permeation coefficient D(cm$^2$/sec) according to the equation below,

$$D = \{(V \times l) / (A \times t)\} \times \ln\{(C_1 - C_m) / (C_2 - C_n)\}$$

wherein (V is the liquid volume in cell B (cm$^3$)), (1 is the thickness of the electrolyte membrane (cm)), (A is the cross-sectional area of the electrolyte membrane (cm$^2$)), (t is a time (sec), $C_1$ is the solute concentration in cell B at t = 1 (mole/cm$^3$)), ($C_2$ is the concentration of solute in cell B at t = 2 (mole/cm$^3$)), ($C_m$ is the solute concentration in cell A at t = 1 (mole/cm$^3$)), ($C_n$ is the concentration of solute in cell A at t = 2 (mole/cm$^3$)). Because the permeated amount of methanol is sufficiently small, V was set at a constant value for the original volume of pure water. D was also estimated at the original concentration (10% by weight) provided that $C_m$ is equal to $C_n$.

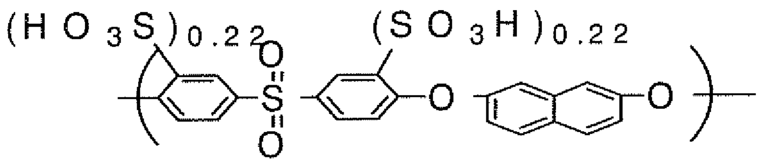

(21)

Example 1

2,7-Dihydroxynaphthalene, 3.2 g (20 mmole), potassium carbonate, 2.9 g (21 mmole), dimethylsulfoxide, 50 mL and toluene, 25 mL were added with stirring to an flask equipped with a distillation column under an argon atmosphere. The mixture was then heated to 130°C and kept at this temperature for four hours to azeotropically distill off the water with toluene in the system. After standing to cool, dipotassium 4,4'-difluorodiphenylsulfone-3,3'-disufonate, 2.45 g (5 mmole), 4,4'-difluorodiphenylsufone, 3.81 g (15 mmole) and toluene, 10 mL were added to the mixture, which was heated to 170°C to distill off the toluene and continue the reaction for 8 hours. After standing to cool, a large quantity of hydrochloric acid was added dropwise to the mixture to form a precipitate, which was filtered to recover. Water washing and filtering of the precipitate were the repeated until the washing liquor became neutral. The precipitate was dried under vacuum to yield 7.82 g of the polymer electrolyte. High resolution NMR analysis of this compound confirmed the structure described above. The subscript in the sulfonic acid group indicates the average number of substitution in the sulfonic acid group. The results in the measurements of various physical properties for this polymer are given below. The permeability coefficient for methanol is given in Table 1.

| | |
|---|---|
| Number average molecular weight: | Mn = 3.0 x $10^4$ |
| Ion exchange capacity: | 1.0 meq/g |
| Proton conductivity: | 1.2 x $10^{-2}$ S/cm |
| Membrane thickness: | 34μm |
| Water absorptivity: | 23% |

$$R = 0.31$$

The value of R was determined by $^1$H-NMR analysis (600 MHz, DMSO-d6). Specifically, the polymer electrolyte, 19.6 mg, was dissolved in DMSO-d6, 0.6 ml to obtain a two NMR dimensional spectrum, which was analyzed as followed.

It was at first confirmed that this polymer electrolyte is substantially composed of a total of four kinds of the aromatic carbon ring, which comprises two kinds of the benzene ring ((1) sulfonated form and (2) non-sulfonated form), (3) an asymmetric naphthalene ring and (4) a symmetric naphthalene ring. In the naphthalene ring herein, the difference in two adjacent benzene rings sulfonated such that both benzene rings have the non-sulfonated form (2) or one ring has the non-sulfonated form (2) but other does the sulfonated form (1) generates two kinds of the naphthalene ring of the asymmetric naphthalene ring (3) and symmetric naphthalene ring (4). Because the sulfonated benzene ring (1) composition is much smaller relative to the non-sulfonated benzene ring (2) composition, a chance to have the sulfonated form (1), in which both of two adjacent benzene rings in the naphthalene ring are sulfonated is much smaller.

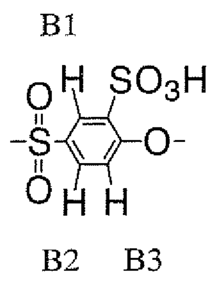
(1)

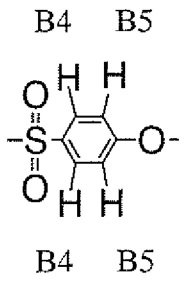
(2)

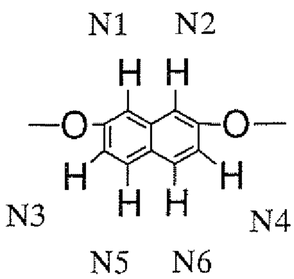
(3)

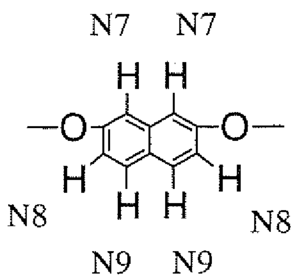
(4)

Results for NMR analysis and identification are shown below. They include, in sequence from left, a chemical shift of each proton, a kind of proton species identified (refer to the above structural formula, (1) to (4)) and an area value (integration) of each proton peak.

| Chemical shift | Proton | Area Value |
|---|---|---|
| 6.99 | B3 | 112 |
| 7.17 | B5 | |

(continued)

| Chemical shift | Proton | Area Value |
|---|---|---|
| 7.22 | N4 | |
| 7.24 | N3 | 1248 (sum of B5, N4, N3 and N8) |
| 7.28 | N8 | |
| 7.51 | N2 | |
| 7.58 | N7 | 479 (sum of N2, N7 and N1) |
| 7.64 | N1 | |
| 7.83 | B2 | 131 |
| 7.93 | B4 | 796 |
| 7.99 | N5 | |
| 7.99 | N6 | 456 (sum of N5, N6 and N9) |
| 8.03 | N9 | |
| 8.34 | B1 | 100 (basis) |

A relative value for the number of each benzene and naphthalene ring is then estimated to calculate the value of R.

(1) Relative value in the number of the proton on the sulfonated benzene ring
An average value of the integration in three kinds of protons (B1, B2 and B3), each of which is singly located on the sulfonated benzene ring is calculated below.

$$(100 + 131 + 112) / 3 = 114$$

(2) Relative value in the number of the proton on the non-sulfonated benzene ring
The integration value of two protons in B4, which are positioned on the non-sulfonated benzene ring is divided by two.

$$796 / 2 = 398$$

(3 and 4) Relative value in the number of the proton in the naphthalene ring
An average of the sum of the integration value for three kinds of the proton (N2, N7 and N1) present on the naphthalene ring and that for three kinds of the proton (N5, N6 and N9) similarly present on the naphthalene ring is divided by two.

$$(479 + 456) /2 /2 = 234$$

$$R = 234 / (114 + 398 + 234)$$
$$= 0.31$$

This value of R nearly agrees with the one, 0.33, predicted from the relative amount of the raw materials charged.

Example 2

2,6-Dihydroxynaphthalene, 5.61 g (35 mmole), potassium carbonate, 5.08 g (36.8 mmole), dimethylsulfoxide, 88 mL and toluene, 45 mL were added with stirring to an flask equipped with a distillation column under an argon atmosphere. The mixture was then heated to 130°C and kept at this temperature for three hours to azeotropically distil off the water with toluene in the system. After standing to cool, 4,4'-difluorodiphenylsulfone, 7.52 g (29.6 mmole) was added to the mixture, which was heated to 135°C and kept at this temperature for three hours.
Potassium hydroquinonesulfonate, 2.97 g (13 mmole), potassium carbonate, 1.81 g (13.7 mmole), dimethylsulfoxide, 40 mL and toluene, 20 mL were added with stirring to an flask equipped with a distillation column under an argon atmosphere. The mixture was then heated to 130°C and kept at this temperature for three hours to azeotropically distil off the water with toluene in the system. After standing to cool, dipotassium 4,4'-difluorodiphenylsulfone-3,3'-disufonate, 9.51 g (19.4 mmole) was added to the mixture, which was heated to 138°C and kept at this temperature for three hours.

Both reaction mixtures above were combined and diluted with DMSO, 30 mL and heated to react at 130°C for 7 hours and then at 140°C for 7 hours. After standing to cool, the reaction mixture was poured into a large volume of methanol to collect the resulting precipitate by filtration. The precipitate was then washed with a large volume of 4N hydrochloric acid. Water washing and filtration were repeated until the washing liquor became neutral. The precipitate was twice treated with a large excess of hot water for two hours and then dried under vacuum to yield 16.3g of the polymer electrolyte.

Results for high resolution NMR analysis confirmed the chemical structure given below. (The subscript, 0.74 and 0.26, in each repeating unit of the block copolymer indicates the mole ratio in the composition.)

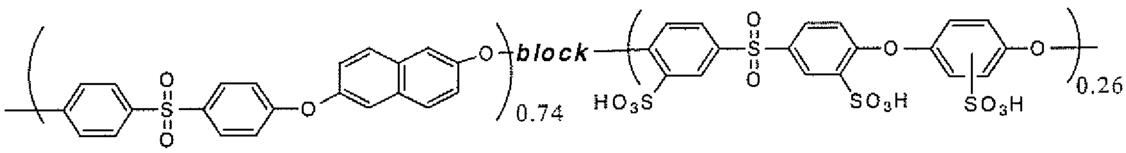

The ion exchange capacity, proton conductivity and water absorptivity are shown in Table 1, whereas the permeation coefficient for methanol is given in Table 2.

| | |
|---|---|
| Number average molecular weight (condition, B): | Mn = $5.2 \times 10^4$ |
| Ion exchange capacity: | 1.86 meq/g |
| Proton conductivity: | $1.4 \times 10^{-1}$ S/cm |
| Membrane thickness: | 21μm |
| Water absorptivity: | 119% |

R = 0.24

The value of R was determined by $^1$H NMR analysis (600 MHz, DMSO-d6).
Specifically, the polymer electrolyte, 20 mg was dissolved in DMSO-d6, 0.6 ml to obtain a two dimensional NMR spectrum, which was analyzed as followed.

It was at first confirmed that this polymer electrolyte is composed of a total of five kinds of the aromatic carbon ring, which comprises three kinds of the benzene ring ((6) phenylsulfone type sulfonated form, (7) phenylsulfone type non-sulfonated form and (8) hydroquinone type sulfonated form), (9) an asymmetric naphthalene ring and (10) a symmetric naphthalene ring. In the naphthalene ring, the difference in which two adjacent benzene rings have the phenylsulfone type non-sulfonated form (7) or one ring has the phenylsulfone type non-sulfonated form (7) but other does the phenylsulfone type sulfonated form (6) generates two kinds of the naphthalene ring of the asymmetric type naphthalene ring (9) and symmetric type naphthalene ring (10). The asymmetric type naphthalene ring (9) is positioned in the coupling segment between the block substantially not having the acid group and the block having the acid group.

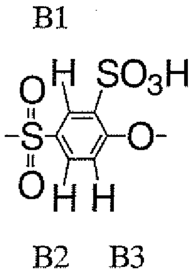

(6)

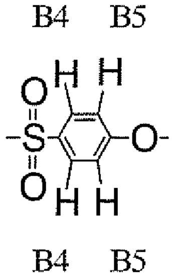

(7)

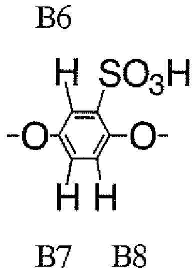

(8)

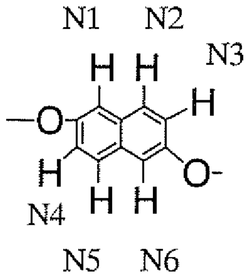

(9)

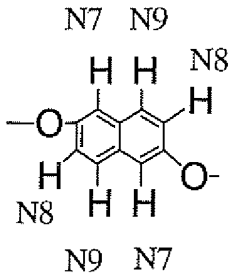

(10)

The results for NMR analysis and identification are shown below. They include a chemical shift of each proton, a kind of proton species identified (refer to the above structural formula (6) to (10)) and an area value (integration) of each proton peak.

| Chemical shift | Proton | Area Value |
|---|---|---|
| 7.02 | B7 | 358 (sum of B7 and B8) |
| | B8 | |
| 7.07 | B3 | 282 |
| 7.20 | B5 | 1629 |
| 7.32 | N3 | 899 (sum of N3, N4 and N8) |
| | N4 | |
| | N8 | |
| 7.46 | B6 | 142 |
| 7.57 | N1 | 100 (sum of N1 and N6) |
| | N6 | |
| 7.65 | N7 | 765 |
| 7.83 | B1 | 424 |
| 7.94 | B4 | 2454 (sum of B4, N2, N5 and N9) |
| | N2 | |
| | N5 | |
| | N9 | |
| 8.36 | B2 | 334 |

A relative value for the number of each benzene and naphthalene ring is then estimated to calculate the value of R.

(6) Relative value in the number of the proton in the phenylsulfone type sulfonated benzene ring An average value of the integration in three kinds of protons (B1, B2 and B3), each of which is singly located on the sulfonated benzene ring was calculated below.

$$(424 + 334 + 282) / 3 = 347$$

(7) Relative value in the number of the proton on the phenylsulfone type non-sulfonated benzene ring
The area value of two protons in B5, which are positioned in the non-sulfonated benzene ring is divided by two.

$$1629 / 2 = 815$$

(8) Relative value in the number of the proton on the hydroquinone type sulfonated benzene ring

A sum of the area value of the protons B6, B7 and B8 positioned in the hydroquinone type sulfonated benzene ring was divided by three.

$$(142 + 358) / 3 = 167$$

(9 and 10) Relative value in the number of the proton in the naphthalene ring

An average of the sum of the area value for three kinds of the proton (N2, N5 and N9) present on the naphthalene ring (equal to the one, in which sum of the integration of the protons in B4, N2, N5 and N9 is subtracted by the integration of the proton in B5) and that for three kinds of the proton (N1, N6 and N7) similarly present on the naphthalene ring is divided by two.

$$(825 + 865) /2 /2 = 423$$

$$R = 423 / (347 + 815 + 167 + 423)$$

$$= 0.24$$

This value of R nearly agrees with the one, 0.25, predicted from the ion exchange capacity as well as the one, 0.24, predicted from the relative amount of the raw materials charged.

Comparative Example 1

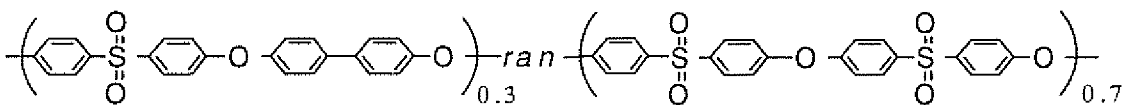

The polyethersulfone copolymer listed above (prepared according to the method described in example 3 in Japan Patent H10-21943. Mn = 5.5 x $10^4$. The subscript in the repeating units of the random copolymer, 0.3 and 0.7, indicates the mole ratio of the composition.), 5 g, was dissolved in concentrated sulfuric acid, 10 g and sulfonated at ambient temperature for 48 hours. The mixture was treated according a common procedure for isolation and purification to yield 5.15 g of the copolymer with the chemical structure given below. (The subscript in the sulfonic acid group, 0.9, indicates the average number of substitution in the sulfonic acid group. This copolymer does not contain the aromatic condensed polycyclic carbon ring.)

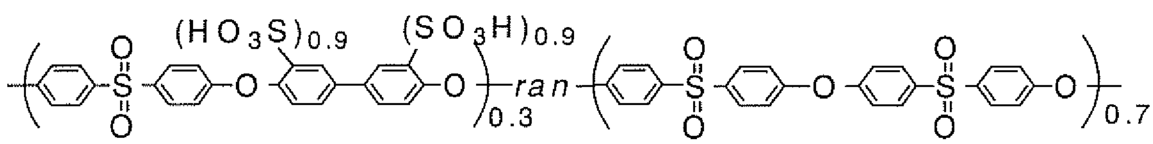

The results for the measurement of various physical properties for this polymer are shown below. The permeation coefficient for methanol is given in Table 1.

| | |
|---|---|
| Number average molecular weight: | Mn = 4.6 x $10^4$ |
| Ion exchange capacity: | 1.1 meq/g |
| Proton conductivity: | 1.7 x $10^{-2}$ S/cm |
| Membrane thickness: | 39 μm |

(continued)

| | |
|---|---|
| Water absorptivity: | 49% |

Comparative Example 2

4,4'-Dihydroxydiphenylsulfone, 2.60 g (10.4 mmole), potassium carbonate, 1.51 g (10.9 mmole), dimethylsulfoxide, 30 mL and toluene, 15 mL were added with stirring to an flask equipped with a distillation column under a nitrogen atmosphere. The mixture was then heated to 135°C and kept at this temperature for three hours to azeotropically distil off the water with toluene in the system. After standing to cool, 4,4-difluorodiphenylsulfone, 2.24 g (8.8 mmole) was added to the mixture, which was heated to 135°C and kept at this temperature for 7 hours.

Potassium hydroquinonesulfonate, 1.06 g (4.6 mmole), potassium carbonate, 0. 67 g (4.9 mmole), dimethylsulfoxide, 20 mL and toluene, 10 mL were added with stirring to an flask equipped with a distillation column under a nitrogen atmosphere. The mixture was then heated to 130°C and kept at this temperature for three hours to azeotropically distil off the water with toluene in the system. After standing to cool, dipotassium 4,4'-difluorodiphenylsulfone-3,3'-disufonate, 3.21 g (6.6 mmole) was added to the mixture, which was heated to 135°C and kept at this temperature for 7 hours.

Both reaction mixtures above were combined and diluted with DMSO, 30 mL and heated to react at 130°C for one hour and then at 140°C for 8 hours.

After standing to cool, the reaction mixture was poured into a large volume of methanol to collect the resulting precipitate by filtration. The precipitate was then washed with a large volume of 4N hydrochloric acid. Water washing and filtration were then repeated until the washing liquor became neutral.

The precipitate was twice treated with a large excess of hot water for two hours and dried under vacuum to yield 4.6g of the polymer electrolyte. (The subscript, 0.82 and 0.18,in each repeating unit of the block copolymer indicates the mole ratio of the composition.)

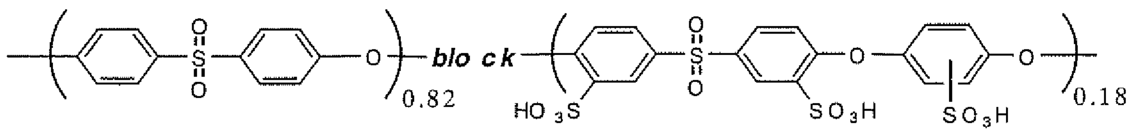

The ion exchange capacity, proton conductivity and water absorptivity are shown in Table 1.

| | |
|---|---|
| Number average molecular weight: | Mn = 5.8 x $10^4$ |
| Ion exchange capacity: | 1.79 meq/g |
| Proton conductivity: | 1.1 x $10^{-1}$ S/cm |
| Membrane thickness: | 50μm |
| Water absorptivity: | 440% |

Example 3

The polymer electrolyte described in example 2 was dissolved in N-methyl-2-pyrrolidone to adjust its concentration to 15% by weight. This polymer electrolyte solution was uniformly applied to both sides of a porous polyethylene film (thickness: 11 μm and porosity 55-60%) with a bar coater with a 0.2 mm clearance and dried at 80°C under atmospheric pressure. The film was then immersed in 1 mole/L hydrochloric acid and washed with deionized water to yield the polymer electrolyte composite membrane.

The results for the measurement of various physical properties are shown below.

| | |
|---|---|
| Ion exchange capacity: | 1.64 meq/g |
| Proton conductivity: | 1.2 x $10^{-1}$ S/cm |
| Permeation coefficient for methanol: | 4.8 x $10^{-7}$ $cm^2$/sec |
| Membrane thickness: | 81μm |
| Water absorptivity: | 100% |

Comparative Example 3

The polymer electrolyte composite membrane was prepared according to the method similar to example 3 except the polymer electrolyte described in comparative example 2 was used.
The results for the measurement of various physical properties of this membrane are as follow.

| | |
|---|---|
| Ion exchange capacity: | 1.53 meq/g |
| Proton conductivity: | $9.7 \times 10^{-2}$ S/cm |
| Permeation coefficient for methanol: | $5.8 \times 10^{-7}$ $cm^2$/sec |
| Membrane thickness: | 78μm |
| Water absorptivity: | Measurement was unable because of peeling of the polyethylene layer. |

Example 4

2,7-Dihydroxynaphthalene, 1.60 g (10 mmole), bisphenol A, 2.28 g (10.0 mmole), potassium carbonate, 2.90 g (21 mmole), dimethylsulfoxide, 50 mL and toluene, 50 mL were added with stirring to a flask equipped with a distillation column under an argon atmosphere. The mixture was then heated to 128°C and kept at this temperature for four hours to azeotropically distil off the water with toluene in the system. After standing to cool, dipotassium 4,4-difluorodiphenylsulfone-3,3'-disufonate, 2.45 g (5 mmole), 4,4'-difluorodiphenylsufone, 3.81 g (15 mmole) were added to the mixture, which was heated to 150°C to distill off the toluene and continue the reaction for 9hours at this temperature. After allowed to cool, the mixture was added dropwise to a large quantity of hydrochloric acid to yield a precipitate, which was filtered to recover. Water washing and filtering of the precipitate were repeated until the washing liquor became neutral. The precipitate was dried under vacuum to yield 8.60 g of the polymer electrolyte. (The subscript in each repeating unit in the random copolymer, 0.38, 0.26, 0.12 and 0.24, indicates the mole ratio in the composition.)

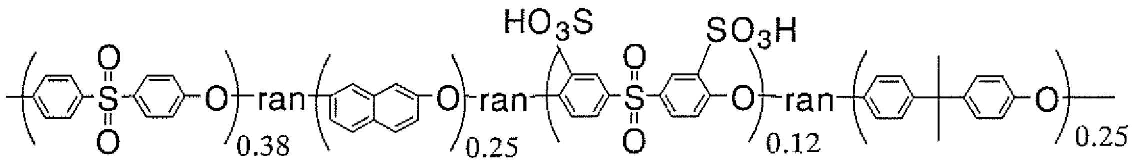

The results in the measurements of various physical properties for this polymer are given below. The permeability coefficient for methanol is given in Table 1.

| | |
|---|---|
| Number average molecular weight: | Mn = $9.5 \times 10^4$ |
| Ion exchange capacity: | 1.04 meq/g |
| Proton conductivity: | $1.2 \times 10^{-2}$ S/cm |
| Membrane thickness: | 25μm |
| Water absorptivity: | 25% |

$$R = 0.15$$

Comparative Example 4

2,7-Dihydroxynaphthalene, 0.61 g (3.8 mmole), bisphenol A, 3.69 g (16.2 mmole), potassium carbonate, 2.90 g (21 mmole), dimethylsulfoxide, 50 mL and toluene, 50 mL were added with stirring to a flask equipped with a distillation column under an argon atmosphere. The mixture was then heated to 125°C and kept at this temperature for three hours to azeotropically distil off the water with toluene in the system. After allowed to cool, dipotassium 4,4-difluorodiphenylsulfone-3,3'-disulfonate, 2.69 g (5.5 mmole), 4,4'-difluorodiphenylsufone, 3.68g (14.5 mmole) were added to the mixture, which was heated to 140°C to distill off toluene, heated to 150°C and continue the reaction for three hours at this temperature. After allowed to cool, the mixture was added dropwise to a large quantity of hydrochloric acid to yield a precipitate, which was filtered to recover. Water washing and filtering of the precipitate were then repeated

until the washing liquor became neutral. The precipitate was dried under vacuum to yield 8.6 g of the polymer electrolyte. (The subscript in each repeating unit in the random copolymer, 0.36, 0.10, 0.14 and 0.40, indicates the mole ratio in the composition.)

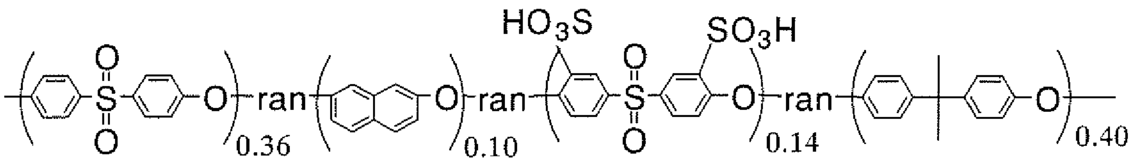

The results in the measurements of various physical properties for this polymer are given below. The permeability coefficient for methanol is given in Table 1.

| | |
|---|---|
| Number average molecular weight: | Mn = 5.1 x $10^4$ |
| Ion exchange capacity: | 1.13 meq/g |
| Proton conductivity: | 3.6 x $10^{-2}$ S/cm |
| Membrane thickness: | 54μm |
| Water absorptivity: | 42% |

R = 0.05

Table 1

| | R | Ion exchange capacity (meq/g) | Proton conductivity (S/m) | Water absorptivity (%) |
|---|---|---|---|---|
| Example 1 | 0.31 | 1.0 | 1.2 x $10^{-2}$ | 23 |
| Example 4 | 0.15 | 1.0 | 1.2 x $10^{-2}$ | 25 |
| Comparative example 4 | 0.05 | 1.1 | 3.6 x $10^{-2}$ | 42 |
| Comparative example 1 | 0 | 1.1 | 1.7 x $10^{-2}$ | 49 |
| Example 2 | 0.24 | 1.9 | 1.4 x $10^{-1}$ | 120 |
| Comparative example 2 | 0 | 1.8 | 1.1 x $10^{-1}$ | 440 |

It can be readily understood from the above results that the polymer electrolyte in the present invention has significantly lower water absorptivity and excellent property as the polymer electrolyte for the solid polymer fuel cell as compared with the one not having the polycyclic condensed ring exhibiting a similar level of the ion exchange capacity and proton conductivity. It can also be understood that the water absorptivity is particularly lower as the value of R becomes higher than 0.15.

Comparative example 5

The permeation coefficient for methanol was determined for the system using the Nafion 115 membrane. (Commercial product. The polymer main chain is an aliphatic hydrocarbon chain and the polymer does not comprise the aromatic ring.) The results in the measurements of physical properties are shown in Table 2.

| | |
|---|---|
| Ion exchange capacity: | 0.9 meq/g |
| Proton conductivity: | 1.0 x $10^{-1}$ S/cm |
| Membrane thickness: | 130μm |

Table 2

| | R | Permeation coefficient ($cm^2$/sec) | Proton conductivity (S/m) |
|---|---|---|---|
| Example 1 | 0.31 | $6.9 \times 10^{-8}$ | 34 |
| Example 4 | 0.15 | $8.5 \times 10^{-8}$ | 26 |
| Comparative example 4 | 0.05 | $2.5 \times 10^{-7}$ | 59 |
| Comparative example 1 | 0 | $1.5 \times 10^{-7}$ | 39 |
| Example 2 | 0.24 | $5.3 \times 10^{-7}$ | 24 |
| Comparative example 2 | 0 | $1.3 \times 10^{-6}$ | 62 |
| Comparative example 5 | | $1.2 \times 10^{-6}$ | 130 |

It can be readily understood from the above results that the polymer electrolyte in the present invention has the significantly lower permeability for methanol and the excellent property as the polymer electrolyte for the solid polymer fuel cell, particularly direct methanol-based fuel cell as compared with the one exhibiting a similar level of the properties such as the ion exchange capacity, proton conductivity and water absorptivity.

Possible application to industries

The polymer electrolyte in the present invention is industrially useful in application to the solid polymer fuel cell, particularly direct methanol-based fuel cell because introducing the specific ratio of the number of the aromatic condensed polycyclic carbon ring to the number of the total aromatic carbon ring in the aromatic carbon ring in the polymer structure gives not only higher methanol-resistance but also excellent properties in the chemical stability such as the resistance to oxidation, radical attack and hydrolysis, the mechanical strength, water resistance and proton conductivity and power generation capability of the membrane and good processability in fabrication of the membrane-electrode assembly. Among all, the excellent water resistance is particularly advantageous because this property is tied with constraining a dimensional change accompanied by the moisture absorption and drying during the operation and stoppage of the fuel cell, that is, a stable operation of the fuel cell.

## Claims

1. A polymer electrolyte comprising the polymer main chain having the oxygen element and/or sulfur element and the aromatic carbon ring, and the ion exchange group being directly bonded to a part or all of the aromatic carbon ring, wherein the ratio (R) of the number of the aromatic condensed cyclic carbon ring to the number of all of the aromatic carbon ring (number of aromatic condensed polycyclic carbon ring/number of all of the aromatic carbon ring) in the polymer electrolyte satisfies the equation below,

$$1 > R = 0.15$$

2. The polymer electrolyte according to claim 1, wherein the polymer electrolyte comprises one or more of the repeating unit having the ion exchange group selected from the general formula (1a) to (4a),

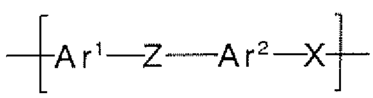
(1a)

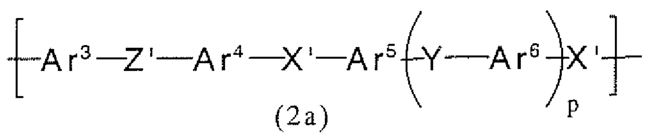
(2a)

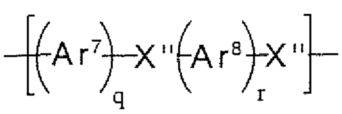
(3a)

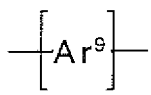
(4a)

(wherein $Ar^1$-$Ar^9$ represents a divalent aromatic carbon ring, which may have a substituent independent of each other and have an ion exchange group in the aromatic carbon ring. When the substituent on $Ar^1$-$Ar^9$ has an aromatic carbon ring, said aromatic carbon ring may have the ion exchange group. Z and Z' represent either CO or $SO_2$ independent of each other, whereas X, X' and X" represent either O or S independent of each other. Y represents a direct bond or a methylene group, which may have a substituent. p represents 0, 1 or 2, whereas q and r represent 1, 2 or 3 independent of each other,)
and one or more of the repeating unit substantially not having the ion exchange group chosen from the general formula (1b) to (4b),

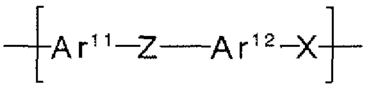
(1b)

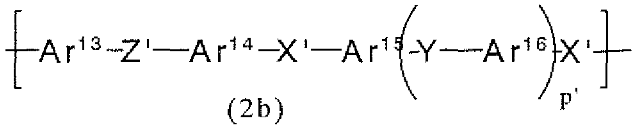
(2b)

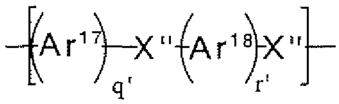
(3b)

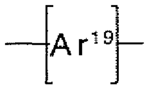
(4b)

(wherein $Ar^{11}$-$Ar^{19}$ represent a divalent aromatic carbon ring, which may have a substituent independent of each other. Z and Z' represent either CO or $SO_2$ independent of each other, whereas X, X' and X"' represent either O or S independent of each other. Y represents a direct bond or a methylene group, which may have a substituent. p' represents 0, 1 or 2, whereas q' and r' represent 1, 2 or 3 being independent of each other.)

**3.** The polymer electrolyte according to claim 1, wherein the polymer electrolyte is represented by the general formula (5) below,

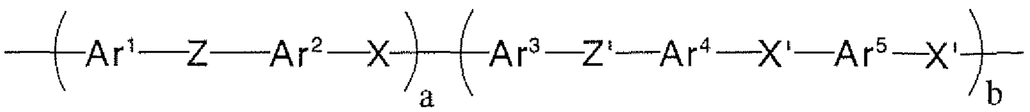
(5)

(wherein $Ar^1$-$Ar^5$ represent a divalent aromatic carbon ring which may have a substituent independent of each other. and Z and Z' represent either CO or $SO_2$ independent of each other, whereas X and X' represent either O or S being independent of each other. When any of $Ar^1$-$Ar^5$ does not contain the aromatic carbon ring as a substituent, at least any one of $Ar^1$-$Ar^5$ contains the ion exchange group, whereas when any substituent in $Ar^1$-$Ar^5$ contains the aromatic carbon ring, at least either one of $Ar^1$-$Ar^5$ or the aromatic carbon ring contained has the ion exchange group in the aromatic carbon ring. The number of the repeating unit, a and b, represent an integer larger than 0, respectively and a + b is larger than 20.)

**4.** The polymer electrolyte according to any one of Claim 1 to 3, wherein the aromatic condensed polycyclic carbon ring is the two-ring to four-ring aromatic condensed polycyclic carbon ring.

**5.** The polymer electrolyte according to any one of the claim 1 to 4, wherein the ion exchange group is the acid group.

**6.** The polymer electrolyte according to Claim 5, wherein the acid group is any one of the sulfonic acid group, sulfoneimide group, phosphonic acid group and carboxylic acid group.

**7.** The polymer electrolyte according to any one of Claim 1 to 6, wherein the ion exchange capacity ranges from 0.1 to 4 meq/g.

**8.** The polymer electrolyte according to any one of Claim 1 to 4, wherein the polymer electrolyte comprises one or more of a block having the acid group and one or more of a block substantially not having the acid group, respectively.

9. The polymer electrolyte according to Claim 8, wherein the block substantially not having the acid group contains the aromatic condensed polycyclic carbon ring.

10. A polymer electrolyte composition by using the polymer electrolyte according to any one of Claim 1 to 9 as an effective component.

11. A polymer electrolyte membrane comprising the polymer electrolyte according to any one of Claim 1 to 9.

12. The polymer electrolyte membrane comprising the polymer electrolyte composition according to Claim 10.

13. The polymer electrolyte membrane for a direct methanol-type fuel cell comprising the polymer electrolyte according to any one of Claim 1 to 9.

14. The polymer electrolyte membrane for a direct methanol-type fuel cell comprising the polymer electrolyte composition according to Claim 10.

15. A solid polymer fuel cell comprising the polymer electrolyte according to any one of Claim 1 to 9.

16. The solid polymer fuel cell comprising the polymer electrolyte composition according to Claim 10.

17. The solid polymer fuel cell comprising the polymer electrolyte membrane according to Claim 11.

18. A direct methanol-type fuel cell comprising the polymer electrolyte according to any one of Claim 1 to 9.

19. The direct methanol-type fuel cell comprising the polymer electrolyte composition according to Claim 10.

20. The direct methanol-type fuel cell comprising the polymer electrolyte membrane according to any one of Claim 11 to 14.

**INTERNATIONAL SEARCH REPORT**

International application No.
PCT/JP2004/019672

A. CLASSIFICATION OF SUBJECT MATTER
Int.Cl[7] C08G75/23, C08G65/48, C08J5/22, H01B1/06, H01M8/02, H02M8/10// C08L71:10, C08L81:06

According to International Patent Classification (IPC) or to both national classification and IPC

B. FIELDS SEARCHED

Minimum documentation searched (classification system followed by classification symbols)
Int.Cl[7] C08G75/23, C08G65/48, C08J5/22, H01B1/06, H01M8/02, H01M8/10// C08L71:10, C08L81:06

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
CA, REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2003-100317 A (Hitachi, Ltd.), 04 April, 2003 (04.04.03), Claims; Par. Nos. [0049] to [0061], [0476] to [0521] & EP 1296398 A2 & CA 2394674 A1 & US 2003/96149 A1 | 1-7,10-20 |
| A | WO 2002/62896 A1 (Kaneka Corp.), 15 August, 2002 (15.08.02), Claims & KR 2003072619 A & EP 1380619 A1 & US 2004/72045 A1 | 1-20 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 March, 2005 (09.03.05) | 22 March, 2005 (22.03.05) |
| Name and mailing address of the ISA/ Japanese Patent Office | Authorized officer |
| Facsimile No. | Telephone No. |

Form PCT/ISA/210 (second sheet) (January 2004)